# EUROPÄISCHE PATENTSCHRIFT

(11) **EP 2 396 184 B1**
(45) Veröffentlichungstag und Bekanntmachung des Hinweises auf die Patenterteilung: **23.10.2013**
(21) Anmeldenummer: 09765076.6
(22) Anmeldetag: 01.12.2009
(51) Int. Cl.: B60G 17/052

(54) **GESCHLOSSENE NIVEAUREGELANLAGE FÜR FAHRZEUGE**
CLOSED RIDE CONTROL SYSTEM FOR VEHICLES
SYSTÈME FERMÉ RÉGULATEUR DE NIVEAU POUR VÉHICULES

(30) Priorität: 12.02.2009 DE 102009003472
(43) Veröffentlichungstag der Anmeldung: 21.12.2011
(73) Patentinhaber: Continental Teves AG & Co. oHG, 60488 Frankfurt (DE)
(72) Erfinder: HEIN, Dierk, 30900 Wedemark (DE)
(86) Internationale Anmeldenummer: PCT/EP2009/066106
(87) Internationale Veröffentlichungsnummer: WO 2010/091751

(56) Entgegenhaltungen:
- EP-A2- 1 243 447
- DE-A1- 10 240 357
- DE-A1-102004 056 883
- DE-C1- 10 231 251

## Beschreibung

Die Erfindung betrifft gemäß dem Oberbegriff des Anspruchs 1 eine geschlossene Niveauregelanlage für Fahrzeuge, durch die ein Fahrzeugaufbau gegenüber mindestens einer Fahrzeugachse abgefedert ist.

Eine geschlossene Niveauregelanlage für Fahrzeuge der eingangs genannten Art ist in der europäischen Patentanmeldung EP 1 243 447 A2 beschrieben. Die aus dieser Druckschrift bekannte, geschlossene Niveauregeleinrichtung weist zwei oder vier steuerbare Wegeventile, einen Druckmittelvorratsbehälter und mindestens zwei Druckmittelkammern mit jeweils einem steuerbaren Wegeventil auf. Mit dieser Niveauregelanlage lässt sich Druckmittel aus den Druckmittelkammern in den Druckmittelvorratsbehälter und umgekehrt überführen. Weiterhin lässt sich Luft aus der Atmosphäre in den Druckmittelvorratsbehälter leiten, wobei die verdichtete Luft vor dem Eintritt in den Druckmittelvorratsbehälter in einem Lufttrockner getrocknet wird. Zur Regeneration des Lufttrockners lässt sich Druckmittel aus dem Druckmittelvorratsbehälter über eine Drossel entspannen und im Vergleich zur Lufttrocknung in entgegengesetzter Richtung durch den Lufttrockner über ein Ablassventil zur Atmosphäre führen. Die Regeneration des Trockners in entgegengesetzter Richtung ist ungünstig, weil sie weniger wirksam ist und daher mit einem größeren Luftverbrauch verbunden ist. Des Weiteren gibt es Leitungspfade im System, die in bestimmten Betriebszuständen mit feuchter Luft gefüllt bleiben, die sich nur nachträglich durch zusätzliche Regenerationszyklen wieder entfernen lässt.

Eine direkte Befüllung der Luftfedern, was z.B. nach langer Stillstandzeit des Fahrzeugs vorkommen kann, ist zwar gemäß der geschlossenen Niveauregelanlage der DE 102 31 251 C1 möglich, da der Kompressor Luft direkt aus der Atmosphäre über eine zusätzliche, zu seinem Eingang geführte Leitung ansaugen kann und sich diese Luft vom Ausgang des Kompressors direkt den Luftfedern zuleiten lässt. In diesem Fall erfolgt die direkte Befüllung der Luftfedern jedoch mit feuchter Luft, die nachträglich durch entsprechende Regenerationszyklen getrocknet werden muss.

Die für das Entfernen der Luftfeuchtigkeit benötigten Regenerationszyklen bedeuten zusätzliche Kompressorlaufzeiten, da die Luft zunächst in das System gefördert und dann wieder abgelassen werden muss, was bei der Gesamtlebensdauerlaufzeit des Kompressors berücksichtigt werden muss. Diese zusätzlichen Kompressorlaufzeiten bedeuten eine Verringerung der Einsatzbereitschaft für das eigentliche Niveauregelsystem, da der Kompressor und die Ventile länger im Einsatz sind und zum thermischen Eigenschutz zeitweise nicht benutzt werden dürfen. Eine zusätzliche Trocknung der Systemluft im Betrieb der Niveauregelanlage ist nur bei Förderung der Luft von den Luftfedern in den Speicher möglich. Bei Luftförderung vom Speicher in die Luftfedern wird die Luft vor dem Trockner zu den Luftfedern abgeleitet.

Aus der DE 102 40 357 A1 ist eine Luftfederungsanlage für ein Fahrzeug bekannt, bei welcher der Trockner bei Luftförderung durch einen Kompressor stets durchflossen wird und sowohl die Lufttrocknung als auch die Regeneration des Trockners in derselben Fließrichtung erfolgen. Der Aufbau dieser Anlage ist kompliziert, da vor dem Trockner ein druckluftgesteuertes 4/3-Wegeventil angeordnet ist, das in Abhängigkeit vom Luftdruck in der Anlage in drei Schaltstellungen bringbar ist, von denen die erste Schaltstellung einen Durchlass durch das 4/3-Wegeventil mit relativ großem Durchlassquerschnitt, in der zweiten Schaltstellung einen gedrosselten Durchlassquerschnitt und in der dritten Schaltstellung einen gedrosselten Ablass zur Atmosphäre freigibt. In dieser dritten Schaltstellung erfolgt eine Regeneration des Trockners. Die Druckluft zum Schalten des 4/3-Wegeventils wird vor dem Trockner abgezweigt und ist daher mit Feuchtigkeit belegt. Diese Luft lässt sich nicht durch eine Systemfunktion trocknen, da sie sich in einem nicht durchströmten Leitungsteil befindet, was die Gefahr des Einfrierens des auch als Ablassventil dienenden 4/3-Wegeventils in sich birgt.

Der Erfindung liegt die Aufgabe zugrunde, eine geschlossene Niveauregelanlage für Fahrzeuge zu schaffen, die einen einfachen Aufbau aufweist, einen geringen Bauraum beansprucht, die aus der Umgebung geförderte Luft durch den Trockner leitet, keine Pfade vor dem Trockner aufweist, die sich mit feuchter Luft füllen können und mit einer möglichst geringen Anzahl einfach aufgebauter Wegeventile auskommt.

Diese Aufgabe wird erfindungsgemäß durch die Merkmale des Anspruchs 1 gelöst, während die Unteransprüche vorteilhafte Weiterbildungen definieren.

Bei der Niveauregelanlage gemäß dem Oberbegriff des Anspruchs 1 ist erfindungsgemäß ein Rückschlagventil in der Druckmittelleitung zwischen einem Ausgang des Lufttrockners und dem Wegeventil zur Verbindung des Ausgangs des Lufttrockners mit dem Druckmittelvorratsbehälter angeordnet, zweigt die Druckmittelleitung zum Wegeventil, das die Zufuhr und Ableitung von Druckluft in der Druckmittelleitung zu den Druckmittelkammern steuert, von der Druckmittelleitung zum Druckmittelvorratsbehälter am Ausgang des Lufttrockners und vor dem genannten Rückschlagventil ab, sind ein weiteres Rückschlagventil und eine Drossel in einer Druckmittelleitung angeordnet, die in einem Punkt zwischen dem ersten Rückschlagventil und dem Wegeventil zur Verbindung der Druckmittelleitung mit dem Druckmittelvorratsbehälter abzweigt und mit einem Eingang oder einem Trocknerbett des Lufttrockner in Verbindung steht, wobei dieses weitere Rückschlagventil in Richtung vom Lufttrockner zum Punkt zwischen dem ersten Rückschlagventil und dem Wegeventil zur Verbindung der Druckmittelleitung mit dem Druckmittelvorratsbehälter sperrt.

Ein Vorteil der Niveauregelanlage gemäß der Erfindung ist darin zu sehen, dass nur sehr wenige steuerbare Wegeventile benötigt werden, wodurch Bauraum und Kosten gespart werden. Ein weiterer Vorteil ist, dass aus der Umgebung geförderte Luft immer getrocknet wird und dass keine Luftpfade mit feuchter Luft vorhanden sind, die zusätzliche Trocknungs- bzw. Regenerations-Zyklen erforderlich machen. Dadurch ist eine verringerte Kompressorlebensdauer bei gleichzeitig erhöhter Systemverfügbarkeit möglich. Das Standard-Regenerationsprinzip mit Drossel und Rückschlagventil bleibt erhalten, so dass auch nur Software-Änderungen im Regelungssystem für die normale Befüllung der Luftfedern und/oder des Speicherbehälters für Druckluft erforderlich sind. Zusätzliche System-Trocknungszyklen können zudem vorteilhaft entfallen.

Die Druckmittelleitung, in der die Drossel und das weitere Rückschlagventil angeordnet sind, steht mit dem Eingang des Lufttrockners oder direkt mit einem Trocknerbett des Lufttrockners in Verbindung. Der Vorteil mit Einleitung von Druckluft direkt in ein Trocknerbett des Lufttrockners ist darin zu sehen, dass die Druckluft quer zur Trocknungs-Strömungsrichtung des Lufttrockners in das Trocknerbett eingeleitet wird, wodurch die Regeneration des Trockners verbessert wird.

Zu diesem Zweck kann der Lufttrockner einen Dom aufweisen, der in das Trocknerbett hineinragt und mit der Druckluftleitung, in der die Drossel und das weitere Rückschlagventil angeordnet sind, in Verbindung steht, wobei der Dom mindestens eine Öffnung zum Trocknerbett aufweist. Hierbei ist vor dem Eingang in den Dom das weitere Rückschlagventil angeordnet, ebenso die Drossel.

Der Vorteil der zuletzt genannten Weiterbildungen der Erfindung gemäß den Ansprüchen 4 und 5 ist darin zu sehen, dass sich der Trockner mit dem Dom, den Rückschlagventilen und der Drossel zu einer konstruktiv einfachen Baueinheit zusammenfassen lässt, die einen geringen Bauraum beansprucht.

Gemäß einer anderen Weiterbildung der Erfindung nach Anspruch 6 ist vorgesehen, dass die Druckmittelleitung vom Druckmittelvorratsbehälter zum Kompressor und die Druckmittelleitung von den Druckmittelkammern zum Kompressor in einem Punkt vor dem Kompressoreingang zusammengeführt sind und in den Druckmittelleitungen Rückschlagventile angeordnet sind, die in Richtung des Druckmittelvorratsbehälters bzw. der Druckmittelkammern sperren.

Der Vorteil dieser Weiterbildung ist darin zu sehen, dass in einer bestimmten Stellung der in diesen Druckmittelleitungen angeordneten Wegeventile ein Überströmen von Druckluft aus den Druckmittelkammern in den Druckmittelvorratsbehälter unmöglich ist, und zwar unabhängig davon, ob der Luftdruck in den Druckmittelkammern größer oder kleiner ist als der Luftdruck in dem Druckmittelvorratbehälter. Im Ruhezustand der Niveauregelanlage, wenn also keine Regelung erfolgt, können die steuerbaren Wegeventile beispielsweise in diese Ruhestellung überführt werden, so dass ein unbeabsichtigtes Überströmen von Druckluft zwischen den Druckmittelkammern und dem Druckmittelvorratsbehälter nicht stattfinden kann. Darüber hinaus wird durch einen derartigen definierten Zustand der steuerbaren Wegeventile eine Druckmessung des Drucks in den Druckmittelkammern mit Hilfe eines Drucksensors auf einfache Art und Weise möglich. Die mit der Weiterbildung erreichten Vorteile werden bei Erhalt sämtlicher Funktionen der Niveauregelanlage erreicht. Insbesondere ist es weiterhin möglich, aus dem Druckmittelvorratsbehälter über den Lufttrockner Druckluft in die Atmosphäre abzuführen, um den Lufttrockner zu regenerieren.

Gemäß einer Weiterbildung der Erfindung nach Anspruch 7 ist vorgesehen, dass eine Ansaugleitung über ein zur Atmosphäre hin sperrendes Rückschlagventil mit dem Kompressoreingang verbunden ist.

Mit dieser Anordnung ist der Vorteil verbunden, dass sich ein schnelles direktes Befüllen der Luftfeder möglich wird, das beispielsweise nach einer langen Stillstandszeit des Fahrzeugs wünschenswert ist. Zwar ist dieses schnelle Befüllen der Luftfedern dann nur mit feuchter Luft möglich, jedoch lässt sich diese feuchte Luft nachträglich durch entsprechende Trocknungszyklen trocknen, so dass keine feuchte Luft im System verbleibt.

Gemäß einer anderen Weiterbildung der Erfindung nach Anspruch 8 sind die Wegeventile zwischen dem Druckmittelvorratsbehälter und dem Kompressor sowie zwischen der mit der Atmosphäre verbindbaren Druckmittelleitung und dem Kompressor so geschaltet, dass das Luftansaugen aus der Atmosphäre ausschließlich über die über das Rückschlagventil mit dem Eingang des Kompressors verbundene Ansaugleitung und das Ablassen der Druckluft in die Atmosphäre ausschließlich über die vom Ausgang des Lufttrockners zum Wegeventil und von dort über ein weiteres Wegeventil durch die Ablassleitung erfolgen kann.

Der Vorteil der Weiterbildung der Erfindung nach Anspruch 8 ist darin zu sehen, dass die durch den Kompressor angesaugte Luft anschließend stets durch den Lufttrockner geführt wird, und dass die über die Ablassleitung in die Atmosphäre ausgeblasene Luft ebenfalls durch den Lufttrockner geführt wird und der Lufttrockner dadurch regeneriert wird.

Eine vorteilhafte Weiterbildung der Erfindung gemäß Anspruch 9 besteht darin, dass das Wegeventil zwischen dem Druckmittelvorratsbehälter und dem Kompressor sowie das Wegeventil zwischen der Ablassleitung und dem Kompressor als 3/2-Wegeventile und die Wegeventile zu den Druckmittelkammern und in der Ablassleitung als 2/2-Wegeventile ausgebildet sind.

Der Vorteil dieser Weiterbildung gemäß Anspruch 9 ist darin zu sehen, dass die erfindungsgemäße Niveauregelanlage mit einem Minimum an einfach gebauten Wegeventilen und Rückschlagventilen auskommt, wodurch der Bauraum vermindert und die Herstellkosten gesenkt werden.

Die Erfindung wird nachstehend anhand eines in der Zeichnung dargestellten Ausführungsbeispiels weiter erläutert. In der Zeichnung zeigt
Fig. 1 ein pneumatisches Schaltschema der erfindungsgemäßen geschlossenen Niveauregelanlage,
Fig. 2 eine schematische Schnittansicht eines Lufttrockners während einer Trocknungsphase,
Fig. 3 eine schematische Schnittansicht eines Lufttrockners während einer Regenerationsphase, und
Fig. 4 ein pneumatisches Schaltschema einer nicht beanspruchten, geschlossenen Niveauregelanlage mit einem zusätzlichen Druckmittelpfad von den Druckmittelkammern zum Druckmittelvorratsbehälter.

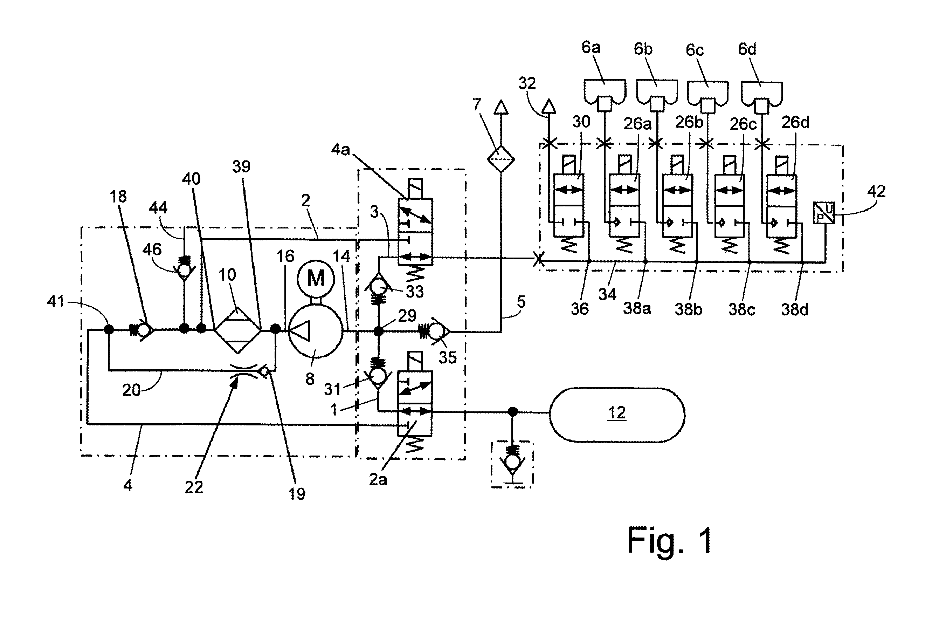

Fig. 1 zeigt eine Niveauregelanlage in schematischer Darstellung, die üblicherweise mit Druckluft betrieben wird und die Druckmittelkammern in Form von Luftfedern 6a bis 6d, einen Kompressor 8, einen Lufttrockner 10 und einen Druckmittelvorratsbehälter 12 enthält. Der Druckmittelvorratsbehälter 12 steht über eine erste Druckmittelleitung 1, die über ein erstes 3/2-Wegeventil 2a und ein Rückschlagventil 31 geführt ist, mit einem Kompressoreingang 14 und ebenfalls über das steuerbare 3/2-Wegeventil 2a und eine vierte Druckmittelleitung 4, in der ein Rückschlagventil 18 und der Lufttrockner 10 angeordnet sind, mit einem Kompressorausgang 16 in Verbindung. Das Rückschlagventil 18 ist so angeordnet, dass es zum Druckmittelvorratsbehälter 12 hin öffnet.

Stromab vom Rückschlagventil 18 zweigt eine Druckmittelleitung 20 ab, die über eine Drossel 22 und ein Rückschlagventil 19 zur Verbindung zwischen dem Kompressorausgang 16 und dem Lufttrocknerausgang 40 geführt ist. Das Rückschlagventil 19 ist so angeordnet, dass es in Richtung der Verbindung zwischen dem Lufttrocknerausgang 40 und dem Kompressorausgang 16 öffnet.

Der Lufttrocknerausgang 40 ist über eine zweite Druckmittelleitung 2 mit einem weiteren 3/2-Wegeventil 4a verbunden, das über eine dritte Druckmittelleitung 3 und ein Rückschlagventil 33 mit einem Punkt 29 verbunden ist, in dem die erste Druckmittelleitung 1 und die dritte Druckmittelleitung 3 zusammengeführt sind, von wo eine Verbindung zum Kompressoreingang 14 besteht.

Die Rückschlagventile 31 und 33 sind so angeordnet, dass sie in Richtung des Kompressoreingangs 14 bzw. zum Punkt 29 hin öffnen.

Das 3/2-Wegeventil 4a ist des Weiteren mit einer Druckmittelleitung 34 verbunden, die über Abzweigungen 38a bis 38d und 2/2-Wegeventile 26a bis 26d mit den Luftfedern 6a bis 6d verbindbar ist. Von einem Punkt 36 zweigt eine Druckmittelleitung 32 ab, in der ein 2/2-Wegeventil 30 angeordnet ist, durch die wahlweise Luft aus der Atmosphäre angesogen und abgelassen werden kann.

Des Weiteren ist ein Drucksensor 42 mit der Druckmittelleitung 34 verbunden. Zum Kompressoreingang 14 ist noch eine Ansaugleitung 5 geführt, in der ein Luftfilter 7 und ein sich zum Kompressoreingang 14 öffnendes Rückschlagventil 35 angeordnet sind.

Ein schnelles Füllen der Luftfedern 6a bis 6d und/oder des Druckmittelvorratsbehälters 12 mit Luft aus der Atmosphäre, beispielsweise nach einer langen Stillstandszeit des Fahrzeugs, lässt sich dadurch erreichen, dass der Kompressor 8 eingeschaltet, die 3/2-Wegeventile 2a und 4a auf Durchlass in Richtung des Druckmittelvorratsbehälters 12 und/oder der Druckmittelleitung 34 geschaltet werden und die 3/2-Wegeventile 26a bis 26d gleichzeitig oder nacheinander in die geöffnete Stellung verstellt werden. Da die durch den Kompressor 8 verdichtete Luft zunächst durch den Lufttrockner 10 und erst danach in die Leitungen 2 und 4 gelangt, wird die Niveauregelanlage nur mit getrockneter Luft befüllt.

Soll Druckluft aus einer oder mehreren der Luftfedern 6a bis 6d in den Druckmittelvorratsbehälter 12 gefördert werden, so werden eine oder mehrere der 2/2-Wegeventile 26a bis 26d geöffnet, das 3/2-Wegenventil 2a in die Durchgangsstellung von der Druckmittelleitung 4 zum Druckmittelvorratsbehälter 12 verstellt und der Kompressor 8 in Gang gesetzt, so dass die Druckluft von einem oder mehreren der Luftfedern 6a bis 6d durch die Leitung 34, das 3/2-Wegeventil 4a und das Rückschlagventil 33 zum Kompressor 8 gelangt und von dort durch den Lufttrockner 10 und das Rückschlagventil 18 in den Druckmittelvorratsbehälter 12 gefördert wird.

Soll umgekehrt Druckluft vom Druckmittelvorratsbehälter 12 zu einer oder mehreren der Luftfedern 6a bis 6d gefördert werden, so bleibt das 3/2-Wegeventil 2a in der dargestellten Stellung, während das 3/2-Wegeventil 4a in die Stellung gebracht wird, in der die Druckmittelleitung 2 mit der Druckmittelleitung 34 verbunden ist, so dass durch den Kompressor 8 Druckluft aus dem Druckmittelvorratsbehälter 12 über den Lufttrockner 10, die Druckmittelleitung 2, das 3/2-Wegeventil 4a zu einer oder mehreren der Luftfedern 6a bis 6d, entsprechend der Position der 2/2-Wegeventile 26a bis 26d gefördert werden kann.

Sowohl beim Fördern von Druckluft aus den Luftfedern 6a bis 6d zum Druckmittelvorratsbehälter 12 als auch umgekehrt vom Druckmittelvorratsbehälter 12 zu den Luftfedern 6a bis 6d wird demnach Restfeuchte im Leitungsbereich zwischen dem Kompressoreingang 14 und den Rückschlagventilen 31, 33, 35 durch den Lufttrockner 10 gefördert und aus dem System entfernt.

Zum Regenerieren des Lufttrockners 10 wird das 3/2-Wegeventil 2a in die Durchgangsposition vom Druckmittelvorratsbehälter 2 zur Druckmittelleitung 4, das 3/2-Wegeventil 4a in die Durchgangsposition von der Druckmittelleitung 2 zur Druckmittelleitung 34 verstellt und das 2/2-Wegeventil 30 zur Ablassleitung 32 hin geöffnet. Die Druckluft aus dem Druckmittelvorratsbehälter 12 strömt dann über die Druckmittelleitung 4, die Druckmittelleitung 20, die Drossel 22, das Rückschlagventil 19 zur Verbindung zwischen dem Kompressorausgang 16 und dem Lufttrocknereingang 39, durch den Lufttrockner 10, die Druckmittelleitung 2, das 3/2-Wegeventil 4a, die Druckmittelleitung 34 und das 2/2-Wegeventil 30 über die Ablassleitung 32 in die Atmosphäre.

Durch das Entspannen der Druckluft infolge der Drosselwirkung wird eine verbesserte Regenerationswirkung des in dem Lufttrockner 10 befindlichen Trockner-Granulates erreicht, d.h. es wird mit relativ wenig Druckluftverbrauch eine relativ hohe Trocknungswirkung erzielt.

Zwischen dem Lufttrocknerausgang 40 und dem Rückschlagventil 18 kann eine Leitung 44 für einen externen Anschluss, in der ein Rückschlagventil 46 angeordnet ist, vorgesehen sein.

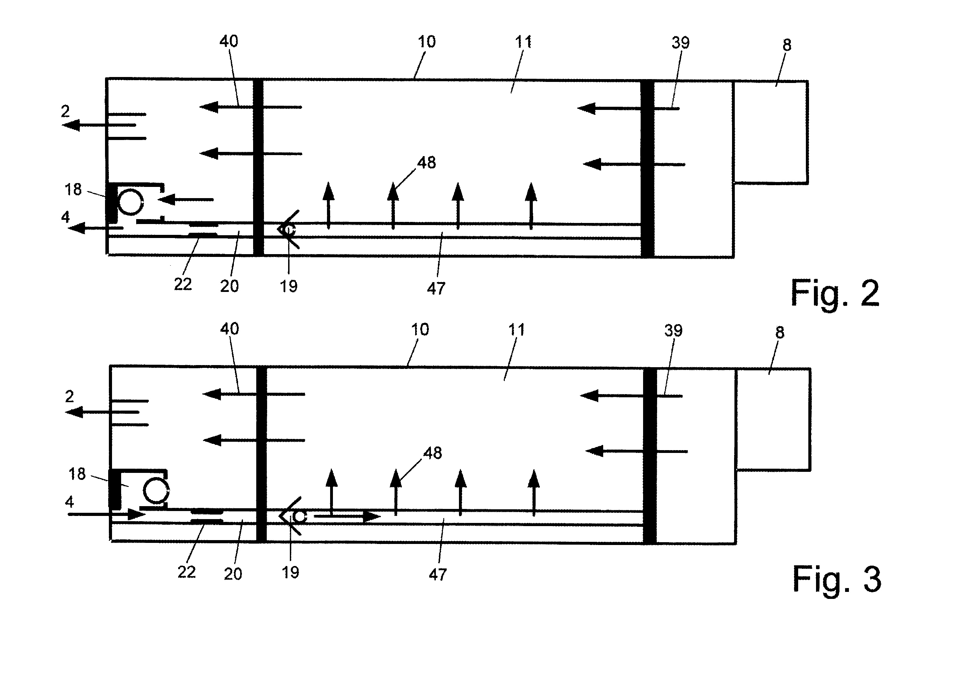

Aus den Figuren 2 und 3 ist eine kompakte Bauweise des Lufttrockners 10 ersichtlich, in dem der Kompressor 8, die Rückschlagventile 18 und 19 sowie die Drossel 22 integriert sind.

Gemäß Fig. 2 fördert der Kompressor 8 direkt zum Lufttrocknereingang 39, von wo die Druckluft in ein Trocknerbett 11 gelangt und getrocknet wird. Vom Lufttrocknerausgang 40 gelangt die getrocknete Druckluft in die Druckmittelleitung 2 und/oder die Druckmittelleitung 4, wobei die getrocknete Druckluft vor Eintritt in die Druckmittelleitung 4 durch das geöffnete Rückschlagventil 18 strömt.

Im Trocknerbett 11 ist ein als Rohr mit Öffnungen 48 zum Trocknerbett 11 hin dargestellter Dom 47 angeordnet, der über das Rückschlagventil 19, die Druckmittelleitung 20 und die Drossel 22 mit der Druckmittelleitung 4 in Verbindung steht.

Wird Druckluft aus dem Druckmittelvorratsbehälter 12 über die Druckmittelleitung 4 zum Lufttrockner 10 geleitet, gelangt diese gemäß Fig. 3 durch die Druckmittelleitung 20, die Drossel 22 und das Rückschlagventil 19 in den Dom 47 und von dort über Öffnung 48 in das Trocknerbett 11, von wo es über den Lufttrocknerausgang 40 in die Druckmittelleitung 2 und von dort ins Freie gelangt. Durch die besondere Anordnung des Domes 47 mit den Öffnungen 48 gelangt die Druckluft zum Regenerieren des Trocknerbetts 11 quer zur normalen Strömungsrichtung in das Trocknerbett 11, wodurch die Wirksamkeit des Regenerationsvorgangs erhöht wird.

Aus den Figuren 2 und 3 ist ersichtlich, dass die in Fig. 1 getrennt dargestellten Elemente, nämlich der Kompressor 8, der Lufttrockner 10, die Rückschlagventile 18 und 19, die Druckmittelleitung 20 und die Drossel 22 zu einer Platz sparenden Baueinheit zusammengefasst sind, die sich einfach und kostengünstig herstellen lässt.

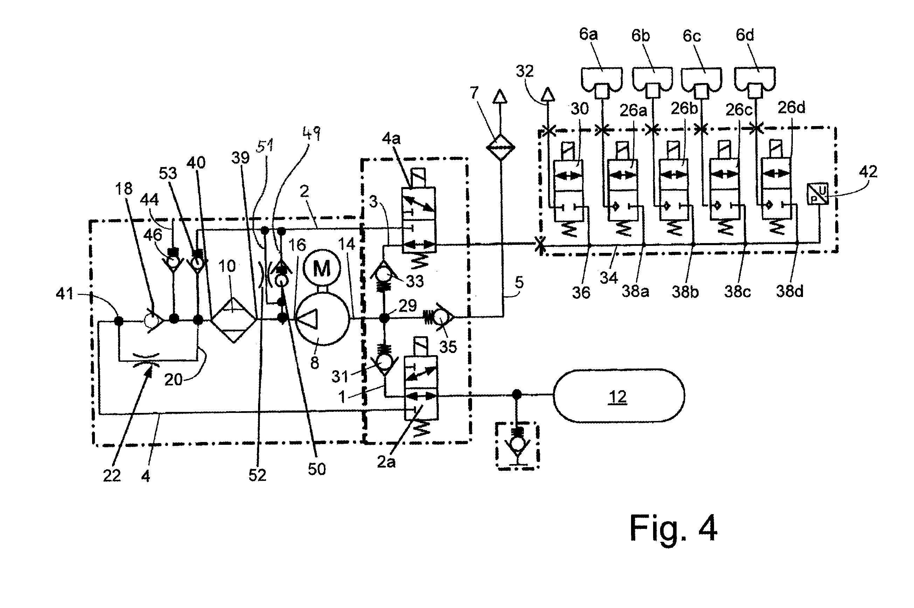

Gemäß der in Fig. 4 gezeigten Abwandlung ist in der Druckmittelleitung 20 nur die Drossel 22 angeordnet und die Leitung 20 mündet in den Trocknerausgang 40. Zwischen dem Lufttrocknereingang 39 und der Druckmittelleitung 2 sind eine Druckmittelleitung 49 mit einem Rückschlagventil 50, das in Richtung der Druckmittelleitung 2 sperrt, parallel dazu eine Druckmittelleitung 51 mit einer Drossel 52 und des weiteren ein Rückschlagventil 53 zwischen dem Lufttrocknerausgang 40 und der Druckmittelleitung 2 vor den Anschlüssen der Druckmittelleitungen 49 und 51 angeordnet. Hierdurch ist es möglich, eine direkte Verbindung von den Druckmittelkammern 6a bis 6d zum Druckmittelvorratsbehälter 10 unter Umgehung des Kompressors 8 aber mit Durchfluss durch den Lufttrockner 10 herzustellen, um einen Druckausgleich zwischen den Druckmittelkammern 6a bis 6d und dem Druckmittelvorratsbehälter 12 sowie eine Trocknung der Druckluft herbeizuführen, wenn der Druck in dem Druckmittelvorratsbehälter12 niedriger als in den Druckmittelkammern 6a bis 6d ist.

### Bezugszeichenliste

- 1: 1. Druckmittelleitung
- 2: 2. Druckmittelleitung
- 3: 3. Druckmittelleitung
- 4: 4. Druckmittelleitung
- 2a: 3/2-Wegeventil
- 4a: 2/2-Wegeventil
- 5: Ansaugleitung
- 6a - 6d: Druckmittelkammern, Luftfedern
- 7: Ansaugfilter
- 8: Kompressor
- 10: Lufttrockner
- 11: Trocknerbett
- 12: Druckluftvorratsbehälter
- 14: Kompressoreingang
- 16: Kompressorausgang
- 18: Rückschlagventil
- 19: Rückschlagventil
- 20: Druckmittelleitung
- 22: Drossel
- 26a - 26d: 2/2-Wegeventile
- 29: Punkt
- 30: 2/2-Wegeventil
- 31: Rückschlagventil
- 32: Druckmittelleitung
- 33: Rückschlagventil
- 34: Druckmittelleitung
- 35: Rückschlagventil
- 36: Punkt
- 38a - 38d: Abzweigungen
- 39: Lufttrocknereingang
- 40: Lufttrocknerausgang
- 42: Drucksensor
- 44: Druckmittelleitung für externen Anschluss
- 46: Rückschlagventil
- 47: Dom
- 48: Öffnungen
- 49: Druckmittelleitung
- 50: Rückschlagventil
- 51: Parallele Druckmittelleitung
- 52: Drossel
- 53: Rückschlagventil

## Patentansprüche

1. Geschlossene Niveauregelanlage für Fahrzeuge, durch die ein Fahrzeugaufbau gegenüber mindestens einer Fahrzeugachse abgefedert ist, die folgende Bestandteile enthält:
- Druckmittelkammern (6a - 6d), die über Abzweigungen (38a - 38d) mit einer Druckmittelleitung (34) verbunden sind,
- einen Kompressor (8),
- einen Lufttrockner (10), der in einer Druckmittelleitung (4) angeordnet ist,
- einen Druckmittelvorratsbehälter (12), der über den Kompressor (8) mit den Druckmittelkammern (6a - 6d) derart in Verbindung steht,
- dass Druckmittel aus dem Druckmittelvorratsbehälter (12) über den Kompressor (8) in jede Druckmittelkammer (6a - 6d) überführbar ist, wobei der Kompressoreingang (14) dann über eine mit einem Wegeventil (2a) durchgeschaltete Druckmittelleitung (1) mit dem Druckmittelvorratsbehälter (12) und der Kompressorausgang (16) dann über eine mit einem Wegeventil (4a) durchgeschaltete Druckmittelleitung (2) mit einer oder mehreren der Druckmittelkammern (6a - 6d) verbunden ist,
- dass Druckmittel aus jeder Druckmittelkammer (6a - 6d) über den Kompressor (8) in den Druckmittelvorratsbehälter (12) überführbar ist, wobei der Kompressoreingang (14) dann über eine mit dem Wegeventil (4a) durchgeschaltete Druckmittelleitung (3) mit einer oder mehreren der Druckmittelkammem (6a - 6d) und der Kompressorausgang (16) dann über die mit dem Wegeventil (2a) durchgeschaltete Druckmittelleitung (4) mit dem Druckmittelvorratsbehälter (12) verbunden ist, und
- dass eine mit der Atmosphäre verbindbare Druckmittelleitung (32),
ein Wegeventil (30), das Wegeventil (4a) und die Druckmittelleitung (3) mit dem Kompressoreingang (14) und über das Wegeventil (4a), die Druckmittelleitung (2) und das Wegeventil (2a) mit dem Druckmittelvorratsbehälter (12) verbindbar ist,
**dadurch gekennzeichnet, dass** ein Rückschlagventil (18) in der Druckmittelleitung (4) zwischen einem Ausgang (40) des Lufttrockners (10) und dem Wegeventil (2a) zur Verbindung des Ausgangs (40) des Lufttrockners (10) mit dem Druckmittelvorratsbehälter (12) angeordnet ist, dass die Druckmittelleitung (2) von der Druckmittelleitung (4) am Ausgang (40) des Lufttrockners (10) und vor dem Rückschlagventil (18) abzweigt, und dass ein Rückschlagventil (19) und eine Drossel (22) in einer Druckmittelleitung (20) angeordnet sind, die (20) in einem Punkt (41) zwischen dem Rückschlagventil (18) und dem Wegeventil (2a) von der Druckmittelleitung (4) abzweigt und mit einem Eingang (39) oder mit einem Trocknerbett (11) des Lufttrockner (10) in Verbindung steht, wobei das Rückschlagventil (19) in Richtung vom Lufttrockner (10) zur Verbindung mit der Druckmittelleitung (4) sperrt.

2. Geschlossene Niveauregelanlage nach Anspruch 1, **dadurch gekennzeichnet, dass** die Druckluft aus der Druckmittelleitung (20) quer zur Trocknungs-Strömungsrichtung des Lufttrockners (10) in das Trocknerbett (11) des Lufttrockners (10) einleitbar ist.

3. Geschlossene Niveauregelanlage nach Anspruch 2, **dadurch gekennzeichnet, dass** der Lufttrockner (10) einen Dom (47) aufweist, welcher in das Trocknerbett (11) hineinragt und mit der Druckluftleitung (20) in Verbindung steht, wobei der Dom (47) mindestens eine Öffnung (48) zum Trocknerbett (11) aufweist.

4. Geschlossene Niveauregelanlage nach Anspruch 3, **dadurch gekennzeichnet, dass** das Rückschlagventil (19) vor dem Eingang in den Dom (47) angeordnet ist.

5. Geschlossene Niveauregelanlage nach Anspruch 3 oder 4, **dadurch gekennzeichnet, dass** die Drossel (22) vor dem Eingang in den Dom (47) angeordnet ist.

6. Geschlossene Niveauregelanlage nach einem der Ansprüche 1 bis 5, **dadurch gekennzeichnet, dass** die Druckmittelleitungen (1) und (3) in einem Punkt (29) vor dem Kompressoreingang (14) zusammengeführt sind, und dass in der Leitung (1) ein in Richtung des Wegventils (2a) sperrendes Rückschlagventil (31) und in der Leitung (3) ein in Richtung des Wegeventils (4a) sperrendes Rückschlagventil (33) angeordnet sind.

7. Geschlossene Niveauregelanlage nach einem der Ansprüche 1 bis 6, **dadurch gekennzeichnet, dass** eine Ansaugleitung (5) über ein zur Atmosphäre hin sperrendes Rückschlagventil (35) mit dem Punkt (29) verbunden ist.

8. Geschlossene Niveauregelanlage nach Anspruch 7, **dadurch gekennzeichnet, dass** die Wegeventile (2a, 4a, 30) so schaltbar sind, dass das Luftansaugen aus der Atmosphäre ausschließlich über die Ansaugleitung (5) und das Ablassen von Druckluft in die Atmosphäre ausschließlich über die Druckmittelleitung (32) erfolgen.

9. Geschlossene Niveauregelanlage nach einem der Ansprüche 1 bis 8, **dadurch gekennzeichnet, dass** die Wegeventile (2a, 4a) als 3/2-Wegeventile und die Wegeventile (26a - 26d und 30) als 2/2-Wegeventile ausgebildet sind.

## Claims

1. Closed ride control system for vehicles by which a vehicle body is suspended with respect to at least one vehicle axle and which includes the following components:
- pressure medium chambers (6a-6d) which are connected via branches (38a-38d) to a pressure medium line (34),
- a compressor (8),
- an air dryer (10) which is arranged in a pressure medium line (4),
- a pressure medium reservoir (12) which is connected via the compressor (8) to the pressure medium chambers (6a-6d) in such a manner that
- pressure medium can be transferred from the pressure medium reservoir (12) via the compressor (8) into each pressure medium chamber (6a-6d), the compressor inlet (14) then being connected via a pressure medium line (1) through-connected by means of a directional valve (2a) to the pressure medium reservoir (12), and the compressor outlet (16) then being connected via a pressure medium line (2) through-connected by means of a directional valve (4a) to one or more of the pressure medium chambers (6a-6d),
- pressure medium can be transferred from each pressure medium chamber (6a-6d) via the compressor (8) to the pressure medium reservoir (12), the compressor inlet (14) then being connected via a pressure medium line (3) through-connected by means of the directional valve (4a) to one or more of the pressure medium chambers (6a-6d), and the compressor outlet (16) then being connected via the pressure medium line (4) through-connected by means of the directional valve (2a) to the pressure medium reservoir (12), and that
- a pressure medium line (32) which is connectable to the atmosphere is connectable a directional valve (30), the directional valve (4a) and the pressure medium line (3) to the compressor inlet (14), and is connectable via the directional valve (4a), the pressure medium line (2) and the directional valve (2a) to the pressure medium reservoir (12),
**characterized in that** a non-return valve (18) is arranged in the pressure medium line (4) between an outlet (40) of the air dryer (10) and the directional valve (2a) in order to connect the outlet (40) of the air dryer (10) to the pressure medium reservoir (12), **in that** the pressure medium line (2) branches off from the pressure medium line (4) at the outlet (40) of the air dryer (10) and upstream of the non-return valve (18), and **in that** a non-return valve (19) and a throttle (22) are arranged in a pressure medium line (20), which pressure medium line (20) branches off from the pressure medium line (4) at a point (41) between the non-return valve (18) and the directional valve (2a) and is connected to an inlet (39) or to a dryer bed (11) of the air dryer (10), the non-return valve (19) blocking in the direction from the air dryer (10) to the connection to the pressure medium line (4).

2. Closed ride control system according to Claim 1, **characterized in that** the compressed air from the pressure medium line (20) can be directed into the dryer bed (11) of the air dryer (10) transversely to the drying flow direction of the air dryer (10).

3. Closed ride control system according to Claim 2, **characterized in that** the air dryer (10) has a dome (47) which projects into the dryer bed (11) and is connected to the compressed air line (20), the dome (47) having at least one opening (48) to the dryer bed (11).

4. Closed ride control system according to Claim 3, **characterized in that** the non-return valve (19) is arranged upstream of the inlet into the dome (47).

5. Closed ride control system according to Claim 3 or 4, **characterized in that** the throttle (22) is arranged upstream of the inlet into the dome (47).

6. Closed ride control system according to any one of Claims 1 to 5, **characterized in that** the pressure medium lines (1) and (3) are brought together at a point (29) upstream of the compressor inlet (14), and **in that** a non-return valve (31) blocking in the direction of the directional valve (2a) is arranged in the line (1), and a non-return valve (33) blocking in the direction of the directional valve (4a) is arranged in the line (3).

7. Closed ride control system according to any one of Claims 1 to 6, **characterized in that** a suction line (5) is connected to the point (29) via a non-return valve (35) blocking towards the atmosphere.

8. Closed ride control system according to Claim 7, **characterized in that** the directional valves (2a, 4a, 30) are switchable in such a manner that aspiration of air from the atmosphere takes place only via the suction line (5) and discharging of compressed air to the atmosphere takes place only via the pressure medium line (32).

9. Closed ride control system according to any one of Claims 1 to 8, **characterized in that** the directional valves (2a, 4a) are in the form of 3/2-way valves and the directional valves (26a-26d and 30) are in the form of 2/2-way valves.

## Revendications

1. Installation de régulation de niveau fermée pour véhicules à travers laquelle une structure est contrainte par ressort par rapport à au moins un essieu de véhicule et contenant les composants suivantes :
- des chambres de moyen de pression (6a - 6d) reliées à une conduite de moyen de pression (34) via des dérivations (38a - 38d) ;
- un compresseur (8) ;
- un dessiccateur d'air (10) disposé dans une conduite de moyen de pression (4) ;
- un bac de réserve de moyen de pression (12) relié de telle sorte aux chambres de moyen de pression (6a - 6d) via le compresseur (8) que :
le moyen de pression peut être transféré du bac de réserve de moyen de pression (12) jusque dans chaque chambre de moyen de pression (6a - 6d) via le compresseur (8), l'entrée de compresseur (14) étant alors reliée au bac de réserve de moyen de pression (12) via une conduite de moyen de pression (1) connectée à une soupape à plusieurs voies (2a) et la sortie de compresseur (16) étant alors reliée à une ou plusieurs des chambres de moyen de pression (6a - 6d) via une conduite de moyen de pression (2) connectée à une soupape à plusieurs voies (4a) ;
le moyen de pression peut être transféré de chaque chambre de moyen de pression (6a - 6d) jusque dans le bac de réserve de moyen de pression (12) via le compresseur (8), l'entrée de compresseur (14) étant alors reliée à une ou plusieurs des chambres de moyen de pression (6a - 6d) via une conduite de moyen de pression (3) connectée à la soupape à plusieurs voies (4a) et la sortie de compresseur (16) étant alors reliée au bac de réserve de moyen de pression (12) via la conduite de moyen de pression (4) connectée à la soupape à plusieurs voies (2a) ;
et
une conduite de moyen de pression (32) pouvant être reliée à l'atmosphère, une soupape à plusieurs voies (30), la soupape à plusieurs voies (4a) et la conduite de moyen de pression (3) peuvent être reliées à l'entrée de compresseur (14) et au bac de réserve de moyen de pression (12) via la soupape à plusieurs voies (4a), la conduite de moyen de pression (2) et la soupape à plusieurs voies (2a) ;
**caractérisée en ce qu'**une soupape de retenue (18) est disposée dans la conduite de moyen de pression (4) entre une sortie (40) du dessiccateur d'air (10) et la soupape à plusieurs voies (2a) en vue de relier la sortie (40) du dessiccateur d'air (10) au bac de réserve de moyen de pression (12), que la conduite de moyen de pression (2) se sépare de la conduite de moyen de pression (4), au niveau de la sortie (40) du dessiccateur d'air (10), et avant la soupape de retenue (18) et qu'une soupape de retenue (19) et un étranglement (22) sont disposés dans une conduite de moyen de pression (20), ladite conduite de moyen de pression (20) se séparant en un point (41) placé entre la soupape de retenue (18) et la soupape à plusieurs voies (2a) par rapport à la conduite de moyen de pression (4) et étant reliée à l'entrée (39) ou à un lit dessiccateur (11) du dessiccateur d'air (10), la soupape de retenue (19) bloquant en direction du dessiccateur d'air (10) pour réaliser la liaison avec la conduite de moyen de pression (4).

2. Installation de régulation de niveau fermée selon la revendication 1, **caractérisée en ce que** l'air comprimé sortant de la conduite de moyen de pression (20) peut être guidé transversalement à la direction d'écoulement de séchage du dessiccateur d'air (10) dans le lit dessiccateur (11) du dessiccateur d'air (10).

3. Installation de régulation de niveau fermée selon la revendication 2, **caractérisée en ce que** le dessiccateur d'air (10) comporte une coupole (47) rentrant dans le lit dessiccateur (11) et reliée à la conduite d'air comprimé (20), la coupole (47) comportant au moins une ouverture (48) par rapport au lit dessiccateur (11).

4. Installation de régulation de niveau fermée selon la revendication 3, **caractérisée en ce que** la soupape de retenue (19) est disposée dans la coupole (47), devant l'entrée.

5. Installation de régulation de niveau fermée selon la revendication 3 ou 4, **caractérisée en ce que** l'étranglement (22) est disposé dans la coupole (47), devant l'entrée.

6. Installation de régulation de niveau fermée selon l'une quelconque des revendications 1 à 5, **caractérisée en ce que** les conduites de moyen de pression (1) et (3) se rejoignent en un point (29) placé devant l'entrée de compresseur (14) et qu'une soupape de retenue (31) bloquant en direction de la soupape à plusieurs voies (2a) est disposée dans la conduite (1) et qu'une soupape de retenue (33) bloquant en direction de la soupape à plusieurs voies (4a) est disposée dans la conduite (3).

7. Installation de régulation de niveau fermée selon l'une quelconque des revendications 1 à 6, **caractérisée en ce qu'**une conduite d'aspiration (5) est reliée au point (29) via une soupape de retenue (35) bloquée par rapport à l'atmosphère.

8. Installation de régulation de niveau fermée selon la revendication 7, **caractérisée en ce que** les soupapes à plusieurs voies (2a, 4a, 30) peuvent être connectées de façon à ce que l'aspiration d'air en provenance de l'atmosphère se produise exclusivement via la conduite d'aspiration (5) et que l'évacuation d'air comprimé dans l'atmosphère se produise exclusivement via la conduite de moyen de pression (32).

9. Installation de régulation de niveau fermée selon l'une quelconque des revendications 1 à 8, **caractérisée en ce que** les soupapes à plusieurs voies (2a, 4a) prennent la forme de soupapes à 3/2 voies et que les soupapes à plusieurs voies (26a - 26d et 30) prennent la forme de soupapes à 2/2 voies.
